(19) Europäisches Patentamt
European Patent Office
Office européen des brevets

(11) **EP 2 249 623 A1**

(12) **EUROPEAN PATENT APPLICATION**

(43) Date of publication:
**10.11.2010 Bulletin 2010/45**

(51) Int Cl.:
*H05B 33/08* (2006.01)

(21) Application number: **10161528.4**

(22) Date of filing: **29.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **04.05.2009 IT TO20090357**

(71) Applicants:
• **Osram Gesellschaft mit Beschränkter Haftung 81543 München (DE)**
• **Osram S.p.A. - Societa' Riunite Osram Edison Clerici 20144 Milano (IT)**
Designated Contracting States:
**IT**

(72) Inventors:
• **Menegazzi, Michele**
  **31038 Paese (Treviso) (IT)**
• **Toscan, Matteo**
  **31010 Maser (Treviso) (IT)**

(74) Representative: **Bosotti, Luciano**
  **Buzzi, Notaro & Antonielli d'Oulx**
  **Via Maria Vittoria, 18**
  **10123 Torino (IT)**

(54) **A low-dropout (LDO) current regulator**

(57) A driver device to produce a regulated current ($I_{LED}$) from an input voltage (VDC1) includes a driver transistor (MOS1) for providing said regulated current ($I_{LED}$) and a stabilization circuit (T1, D1, R1, R2, R3, RS) acting on the control electrode (P) of the driver transistor (MOS1) to determine a stabilized reference value ($I_{LED}$) for the regulated current. The stabilization circuit includes a bipolar transistor (T1) coupled (R2, R3) to the control electrode (P) of the driver transistor (MOS1) in a feedback relationship, whereby, with the bipolar transistor (T1) conducting, increase and decrease of said regulated current ($I_{LED}$) induce decrease and increase of the collector current in the bipolar transistor (T1), respectively. A diode (D1) and a resistance (RS) traversed by the regulated current ($I_{LED}$) are interposed between the base (B1) and the emitter of said bipolar transistor (T1) in a cascade arrangement, so that the stabilized reference value ($I_{LED}$) for the regulated current is determined by the value of resistance (RS) as a function of the difference between the base-emitter voltage of the bipolar transistor (T1) and the voltage across the anode and cathode of said diode (D1).

*Fig. 2*

Printed by Jouve, 75001 PARIS (FR)

EP 2 249 623 A1

**Description**

Field of the invention

This disclosure relates to low-dropout (LDO) current linear regulators.

LDO regulators are used in a wide range of applications in the electronic sector, with the aim to apply a signal, regulated as a function of a reference signal, to a load.

This disclosure was devised with specific attention paid to its possible application to linear regulators for the driving current of light sources such as, for instance, light emitting diodes (LEDs).

Description of the related art

In backlighting applications, discharge lamps (or fluorescent lamps) have been recently widely substituted with LED lighting modules. Such lighting modules can comprise several printed circuit boards PCBs, each of them with one or more LEDs, the boards being interconnected via wires or cables so as to be flexible and adapted to fit in illuminated signs with shaped channel letters, that normally require custom light sources or adaptable systems, as in the present case. The high number of units (or modules) connected in parallel requires a low-cost driving solution.

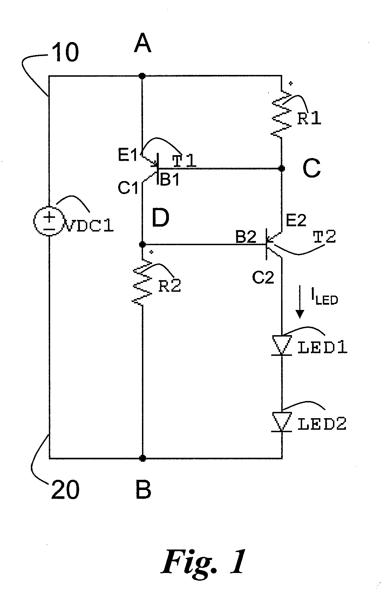

The current linear regulator according to the diagram in Figure 1 is an example of a solution currently adopted for the purpose.

In this example, that relates to the driving of two diodes LED connected in series, and respectively denoted by LED1 and LED2, the device comprises two bipolar transistors (BJT), in this case of a pnp type, denoted by the references T1 and T2, and two resistances R1 and R2.

Referring to Figure 1, the positive terminal of a generator VDC1 of an input dc voltage is connected with the emitter E1 of the first transistor T1 (node A). Resistance R1 is connected between the emitter E1 and the base B1 of the first transistor T1. The base B1 is moreover connected with the emitter E2 of the second transistor T2 (node C). The collector C1 of the first transistor T1 is connected, through node D, to the base B2 of the second transistor T2. Resistance R2 is connected between node D and node B, i.e. the negative terminal of the voltage generator VDC1. The collector C2 of the second transistor T2 supplies the series of both LED1 and LED2. Finally, the cathode of the second diode LED2 is connected to the above mentioned node B on the second supply line 20.

In operation, the high-impedance resistance R2 biases the first transistor T1 with a very low collector current Ic (μA), but the base-emitter voltage $V_{BE1}$ of the first transistor T1 is set to the value $U_{BEon}$.

The value $I_{LED}$ of the current flowing in the load (here represented, by way of example, by both diodes LED1 and LED2) is the same as the collector current $I_{C2}$ of transistor T2, which in turn is approximately equal to the emitter current $I_{E2}$ of the same transistor, and it is therefore determined, through resistance R1, by the value of the voltage drop between the emitter and the base (reference voltage $V_{BE1}$) of transistor T1, according to the following relation:

$$I_{LED} = I_{C2} \approx I_{E2} = \frac{V_{BE1}}{R_1}$$

In the driver of Figure 1, transistor T2 is therefore used as a LED driver circuit, while transistor T1 performs a stabilization function.

The collector current $I_{C2}$ of the driver transistor T2 drives the light sources LED1 and LED2, and the stabilization circuit T1, R1, R2 produces a reference voltage $V_{BEL}$ - which is stable with reference to the input voltage VDC1 - which, being applied to transistor T2, also makes the current $I_{LED}$ flowing across the LEDs stabilized with reference to the input voltage VDC1. A stabilization of the current $I_{LED}$ with reference to the input voltage VDC1 is therefore achieved.

The desired value for the current $I_{LED}$ can therefore be defined by choosing a value for resistance R1.

The typical voltage value between emitter and base for bipolar transistors operating with direct biasing approximately amounts to 0.7 V.

One may therefore consider, by way of reference only, a first numerical example wherein:

- the input direct current, produced by generator VDC1, amounts to 10 volt DC (10 $V_{DC}$), and
- the load, consisting of both diodes LED arranged in series, is made up of InGaN (indium gallium nitride) LEDs; in this case, the maximum direct voltage applicable to each LED in rated current conditions is equal to 4.2 V.

In this case, i.e. with a direct voltage on the load amounting to 2 x 4.2 V = 8.4 V, the circuit requires a very low regulation voltage, of the order of 1,4 V. This voltage amounts to the sum of the voltage drop between emitter and base of the first transistor T1 VEB1=0.7V (which is equal to the voltage drop on resistance R1 VEB1=VR1) and of the voltage drop between emitter and base of the second transistor T2 VEB2=0.7V, because, for a correct current regulation, VEC2 ≥ VBE2=0.7V (rated values).

In order to ensure an adequate speed of reaction to the changes of input voltage VDC1, and in order to avoid current peaks that may damage the load, consisting of a light source comprising two diodes LED connected in series, transistor T2 operates outside the saturation state.

Specifically, if the voltage VBC2 between the base and the collector of the second transistor T2 is higher than zero, then the voltage drop VEC2 between emitter and collector of the same transistor T2, which in turn is given by the sum of the emitter-base voltage VEB2 with the base-collector voltage VBC2, always of the second transistor T2, becomes higher than 0.7V.

One may consider, always by way of reference only, a second numerical example, wherein the input voltage amounts to $12V_{DC}$, and the load is made of gallium nitride LEDs, obtained through thin film technology (ThinGaN). In this case, in order to increase the operating efficiency, the load will comprise at least three LEDs connected in series.

The direct voltage of gallium nitride LEDs obtained through thin-film technology (ThinGaN), in a state of rated current, amounts to 3.8V. As a consequence, in the worst case, the voltage drop on the load equals 3.8V = 11.4V.

With the driving solution of Figure 1, the dropout voltage amounting to 1.4V is too high, and the circuit might not work correctly.

Object and summary of the invention

In view of the foregoing the need is felt for the availability of low-dropout current regulators, for example for driving light sources, such as LEDs (Light Emitting Diodes), adapted to perform a current linear regulation with low drop-out, for example for driving a high number of light sources.

The object of the invention is to provide a device of this kind.

According to the present invention, such an object is achieved by means of a device having the features set forth in the claims that follow.

The claims are an integral part of the disclosure of the invention provided herein.

Brief description of the annexed representations

The invention will now be described, by way of example only, with reference to the enclosed representations, wherein:

- Figure 1 has been previously described, and
- Figure 2 is a circuit diagram representative of an embodiment of the solution described herein.

Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

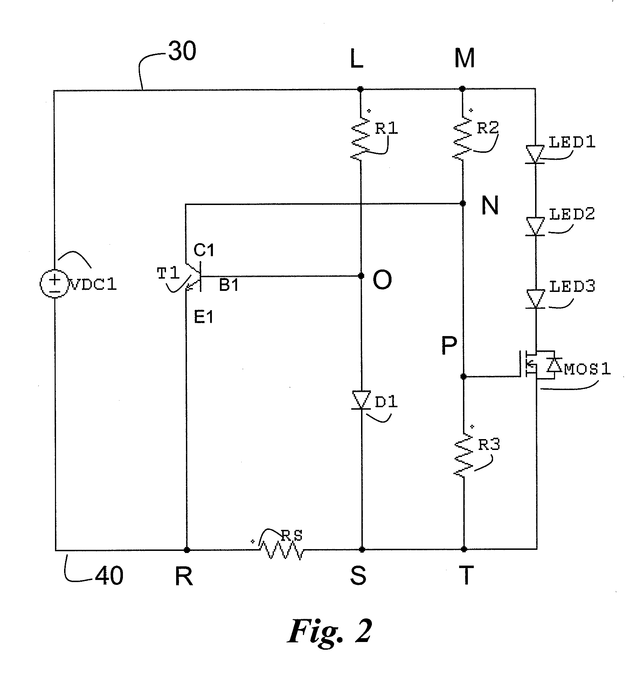

In Figure 2 the parts, elements or components identical or equivalent to parts, elements or components previously described with reference to Figure 1 are denoted by the same references, making it unnecessary to repeat the description thereof.

Also Figure 2 shows a driver device with current linear regulation, wherein, in the same way as in Figure 1, a transistor is provided (e.g. a metal-oxide-semiconductor field-effect transistor (MOSFET), here of the p-channel type) denoted by reference MOS1, used as a LED driver circuit, while a transistor T1 (obtained by using a bipolar transistor (BJT), here of a npn type) performs a stabilization function.

In the presently discussed embodiment, the circuit moreover comprises a diode D1 and four resistances R1, R2, R3 and RS.

In this case, the circuit is also assumed to be adapted to drive a load consisting of a light source comprising three LED diodes connected in series, denoted by LED1, LED2 and LED3. For example, they can be three gallium nitride LEDs, obtained by thin-film technology (ThinGaN), with a voltage drop on each LED, in rated current conditions, amounting to approximately 3.8V, i.e. with a total voltage drop on the related load amounting to 3 x 3.8V = 11.4V. In other words, the operating conditions cannot be tackled, as previously discussed, with the regulator in Figure 1.

It is however obvious that the range of applicability of the solution considered herein with reference to Figure 2 is not limited to this particular context.

Always referring to Figure 2, the positive terminal of the supply source VDC1 is connected to a first supply line 20. Resistance R1 is arranged between said first supply line 30 (node L) and the base B1 of transistor T1 (node O). Base B1 is moreover connected to the anode of diode D1, for example a Schottky diode.

Resistance RS is interposed between the cathode of diode D1 (node S) and the emitter E1 of transistor T1 (node R), and it performs the function of amperometric resistance for sensing the current flowing across the load, i.e. across the diodes LED1, LED2 and LED3.

Emitter E1 is moreover connected, through a common node R, to a second supply line 40, leading to the negative terminal of the voltage generator VDC1.

Resistance R2 is interposed between the first supply line 30 (node M) and the collector C1 of the transistor T1 (node N). Node P, coincident with node N, is connected to the Gate terminal of transistor MOS1.

Resistance R3 as well is connected to node P, and the other terminal is connected, through a node T, to the common node S, to which the cathode of diode D1 and the sensing resistance RS are connected. The common node T is moreover connected to the Source terminal of transistor MOS1.

In the presently considered example, the diodes LED1, LED2 and LED3 are connected in a series arrangement with the anode of LED1, connected to node M, while the cathode of LED3 is connected to the Drain terminal of transistor MOS1; therefore the LEDs are traversed by a current which is equal to the Drain current of transistor MOS1.

With this arrangement, the voltage drop VD1 at the ends of diode D1, set by the resistance R1, identifies the stable reference voltage of the circuit, which will be applied (as it will be best seen in the following) to transistor MOS1, operating as a load driver transistor.

In the presently discussed circuit, the voltage drop VD1 at the ends of diode D1 is lower than the base-emitter voltage of transistor T1, and therefore, when the circuit is ignited, transistor T1 is initially off.

In an embodiment, in order to achieve this result it is possible to use, as the diode D1, a Schottky diode with a threshold voltage VD1, selected so as to be half the base-emitter threshold voltage VBE of transistor T1, i.e.

$$VD1 = \frac{VBEon}{2} = 0.35V.$$

In order that the voltage drop VD1 at the ends of diode D1 is lower than the base-emitter voltage VBE of transistor T1, it is however (also) possible to make use of the presence of resistance RS. The presence of RS causes a voltage drop VRS on RS; consequently, in the mesh formed by T1, D1 and RS, VBE equals the sum of VD1 and VRS. Therefore, because VRS cannot be negative, VD1 is always lower than or equal to VBE.

The biasing resistances R2 and R3 are chosen in such a way as to set the Gate-Source voltage VGS of transistor MOS1 so as to ensure, within the whole variation range of input voltage VDC1, the lowest resistance RDSon (i.e. the resistance which, in a saturated state, the transistor opposes to the current flow between Drain and Source).

At ignition, if it is reasonably assumed that current ID1 flowing across diode D1 and current IR3 flowing across resistance R3 are negligible, the current in the load, i.e. in the LEDs, denoted by $I_{LED}$, is given by:

$$I_{LED} = \frac{V_{DC1} - V_{LED} - V_{DS}}{Rs}$$

Moreover, the voltage drop VBE1 between the base and the emitter of transistor T1 equals the voltage drop VD1 on diode D1, $V_{BE1} = V_{D1}$, because transistor T1 is initially off, as VD1 has been chosen to be lower than the transistor threshold voltage.

The voltage between Gate and Source of transistor MOS1 is set to be higher than VT through the choice of the resistances R2 and R3, so as to ensure that MOS1 is on and that current flows through Drain and Source.

The current ILED produces a voltage drop on Rs, that raises VBE of T1 (VBE = VD1+VRS) until it reaches the ignition VBE of T1. Across T1 an increasing current Ic starts to flow, that consequently decreases the voltage at node N, and therefore the Gate-Source voltage. The voltage between Gate and Source VGS decreases until a steady state or balance condition is obtained, wherein

$$V_{BE} = V_{D1} + V_{RS} = V_{D1} + I_{LED} \cdot R_S$$

with transistor T1 conducting.

Stabilization takes place because initially $I_{LED}$, which approximately corresponds to IRS, produces a voltage drop on RS, and VBE increases until T1 is conducting.

With the transistor T1 on, the current $I_c$ that flows in the collector of transistor T1 increases, the voltage at node N decreases and therefore the voltage VGS between Gate and Source of MOSFET MOS1 also falls, and in this way the current decreases through MOS1.

Similarly, if the current $I_c$ flowing in the collector of transistor T1 should decrease, the voltage at node N would rise, and therefore the voltage VGS between Gate and Source of MOSFET MOS1 would increase. This would cause a higher current $I_{LED}$ on the load, i.e. in the LEDs, due to a higher current flowing across transistor MOS1.

When the bipolar transistor (T1) is conducting, this feedback control allows the rise and the fall of the regulated current $I_{LED}$ that respectively induce a rise and a fall of the collector current of the bipolar transistor (T1).

Substantially, when Ic increases, VR2 increases (or, better expressed, the potential at node N decreases), and therefore VR3 (Gate-Source voltage) falls, $I_{LED}$ decreases, and the effect is a decrease of Ic; conversely, the contrary effect is achieved when Ic decreases, i.e. node N rises, VR3 rises and therefore $I_{LED}$ rises, causing an increase of IC. This mechanism leads to the stabilization of IC and of $I_{LED}$, which will be defined by:

$$V_{BE} = V_{D1} + V_{RS} = V_{D1} + I_{LED} \cdot R_S .$$

This feedback control is stabilized when the voltage VBEon between base and emitter of transistor T1 reaches the threshold value VBE

$$V_{BEon} = V_{BE} = V_{D1} + V_{RS} = V_{D1} + I_{LED} \cdot R_S$$

By knowing the values of the voltage drop VBEon between base and emitter of transistor T1 and the voltage drop $V_{D1}$ on diode D1, it is possible to regulate the value of the current $I_{LED}$ flowing across the load, by selecting the value of resistance $R_S$:

$$R_S = \frac{V_{BEon} - V_{D1}}{I_{LED}}$$

The overall voltage drop of the regulator as a whole is given by:

$$V_{DROP} = V_{R_S} + V_{DS} = I_{LED} \cdot R_S + V_{DS}$$

If a diode D1 is chosen with a value of $V_{D1}$ proximate the value of the base-emitter voltage $V_{BEon}$, the voltage drop $VR_s$ on resistance RS is lower, and therefore the overall voltage drop $V_{DROP}$ will be smaller as well.

In the above discussed example, the minimum overall voltage drop $V_{DROP}$ on the voltage regulator is therefore given by 0.35V+0.05V=0.4V, wherein 0.05V is the minimum voltage $V_{DSon}$ necessary to avoid saturation problems.

Although not being a compulsory choice, using a MOSFET transistor instead of a bipolar transistor (BJT) as a driver transistor leads to a lower voltage drop and to an excellent dynamic behaviour. As a consequence of the variation of the input voltage, a BJT transistor could enter the saturation range and produce undesirable current peaks, going from saturation to the active mode.

Considering that the driver transistor (in the present case the MOSFET MOS1) may also be, at least in principle (as in the case of Figure 1), a bipolar transistor, the terms "source", "gate" and "drain" as used herein and referring the FET technology, are therefore to be understood as being applicable as well, without limitations, to the terms "emitter", "base" and "collector", that denote the equivalent elements of a bipolar transistor. Specifically, the phrase "control electrode", as it is used in the claims, refers indifferently both to the gate of a FET and to the base of a BJT transistor (i.e. to point P in Figure 2).

The regulator described herein can be applied both to LEDs other than the ones that have been discussed by way of example, and to light sources other than LED modules, and also to electrical loads other than light sources.

Without prejudice to the underlying principles of the invention, the details and the embodiments may vary, even appreciably, with respect to what has been described by way of example only, without departing from the scope of the invention as defined by the annexed claims. For example, as previously mentioned, it will be appreciated that the presently described solution is generally adapted to be used for obtaining a low-drop current regulator for applications other than the driving of light sources.

**Claims**

1. A driver device to produce a regulated current ($I_{LED}$) from an input voltage (VDC1), including:

   - a driver transistor (MOS1) for providing said regulated current ($I_{LED}$), said driver transistor (MOS1) having a control electrode (P), and
   - a stabilization circuit (T1, D1, R1, R2, R3, RS) acting on said control electrode (P) of said driver transistor (MOS1) to produce, from said input voltage (VDC1), a stabilized reference value ($I_{LED}$) for said regulated current,

   **characterized in that** said stabilization circuit includes:

   - a bipolar transistor (T1) coupled (R2, R3) to said control electrode (P) of said driver transistor (MOS1) in a feedback relationship, whereby, with said bipolar transistor (T1) conducting, increase and decrease of said regulated current ($I_{LED}$) induce decrease and increase of the collector current in said bipolar transistor (T1), respectively, and
   - interposed between the base (B1) and the emitter of said bipolar transistor (T1), a cascade arrangement of a diode (D1) and a resistance (RS) sensitive to said regulated current so that said stabilized reference value ($I_{LED}$) for said regulated current is determined by the value of said resistance (RS) as a function of the difference between the base-emitter voltage of said bipolar transistor (T1) and the voltage across the anode and cathode of said diode (D1).

2. The device of Claim 1, wherein said driver transistor is a field effect transistor (MOS1), whereby the control electrode (P) of said driver transistor (MOS1) is the gate of the field effect transistor (MOS1).

3. The device of Claim 1 or Claim 2, wherein said diode (D1) is selected with a threshold voltage value proximate the value of the base-emitter voltage (VBEon) of said bipolar transistor (T1).

4.  The device of Claim 1 or Claim 2, wherein said diode (D1) is selected with a threshold voltage value equal to about 1/2 the value of the base-emitter voltage (VBEon) of said bipolar transistor (T1).

5.  The device of any of the previous claims, wherein said diode (D1) is a Schottky diode.

6.  The device of any of the previous claims, wherein said resistance (RS) is a resistance traversed by said regulated current ($I_{LED}$), whereby said stabilized reference value ($I_{LED}$) for said regulated current is determined by the ratio between:

    - the difference between the base-emitter voltage of said bipolar transistor (T1) and the voltage between the anode and cathode of said diode (D1) and
    - the value of said resistance (RS).

7.  The device of any of the previous claims, wherein said bipolar transistor (T1) and said control electrode (P) of said driver transistor (MOS1) are referred to at least one common bias resistance (R2) to receive said input voltage (VDC1), whereby decrease and increase of the collector current of said bipolar transistor (T1) induce increase and decrease of the voltage on said control electrode (P) of said driver transistor (MOS1), respectively.

8.  The device of any of the previous claims, wherein the collector of said bipolar transistor (T1) and said control electrode (P) of said driver transistor (MOS1) are connected to each other.

9.  The device of any of the previous claims, wherein said driver transistor (MOS1) has coupled thereto a light source, such as a LED light source (LED1, LED2, LED3) driven by said regulated current ($I_{LED}$).

*Fig. 1*

*Fig. 2*

Europäisches Patentamt
European Patent Office
Office européen des brevets

# EUROPEAN SEARCH REPORT

Application Number

EP 10 16 1528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/001381 A1 (ROBINSON SHANE P [CA] ET AL) 5 January 2006 (2006-01-05) * figure 1f * | 1-9 | INV. H05B33/08 |
| X | US 2005/029527 A1 (YAMAMOTO KENJI [JP] ET AL) 10 February 2005 (2005-02-10) | 1,8,9 | |
| Y | * figures 5,7 * | 2-7 | |
| Y | JP 60 054483 A (NIHON DENYOO KK) 28 March 1985 (1985-03-28) * abstract * | 1-9 | |
| A | WO 2008/130308 A1 (SYNTUNE AB [SE]; GOOBAR EDGAR [SE]; FORSBERG GUNNAR [SE]) 30 October 2008 (2008-10-30) * abstract; figure 2 * | 1-9 | |

TECHNICAL FIELDS SEARCHED (IPC)

H05B

The present search report has been drawn up for all claims

| Place of search | Date of completion of the search | Examiner |
|---|---|---|
| Munich | 22 July 2010 | Müller, Uta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 1528

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2010

| Patent document cited in search report | | Publication date | Patent family member(s) | | Publication date |
|---|---|---|---|---|---|
| US 2006001381 | A1 | 05-01-2006 | CA | 2572335 A1 | 12-01-2006 |
| | | | WO | 2006002519 A1 | 12-01-2006 |
| | | | EP | 1776628 A1 | 25-04-2007 |
| | | | JP | 2008504654 T | 14-02-2008 |
| | | | US | 2007069664 A1 | 29-03-2007 |
| | | | US | 2007085489 A1 | 19-04-2007 |
| US 2005029527 | A1 | 10-02-2005 | DE | 102004036590 A1 | 10-03-2005 |
| | | | JP | 2005057094 A | 03-03-2005 |
| JP 60054483 | A | 28-03-1985 | NONE | | |
| WO 2008130308 | A1 | 30-10-2008 | EP | 2151145 A1 | 10-02-2010 |
| | | | SE | 0700956 A | 20-10-2008 |

EPO FORM P0459

For more details about this annex : see Official Journal of the European Patent Office, No. 12/82